# EUROPEAN PATENT SPECIFICATION

(11) **EP 3 219 181 B1**
(45) Date of publication and mention of the grant of the patent: **15.04.2020**
(21) Application number: 17159406.2
(22) Date of filing: 06.03.2017
(51) Int. Cl.: A01B 33/02, B62D 51/06

(54) **OPERATING MACHINE**
BETRIEBSMASCHINE
MACHINE D'OPERATION

(30) Priority: 18.03.2016 JP 2016054898
(43) Date of publication of application: 20.09.2017
(73) Proprietor: Honda Motor Co., Ltd., Minato-ku, Tokyo 107-8556 (JP)
(72) Inventor: YAMAZAKI, Nobuo, Wako-shi, Saitama 351-0193 (JP)
(74) Representative: Weickmann & Weickmann PartmbB

(56) References cited:
- US-A- 5 794 422
- US-A1- 2004 194 983
- US-A1- 2007 209 344
- US-A1- 2011 209 886

## Description

### Technical Field

The present invention relates to an operating machine having an operation unit configured to be attachable and detachable depending on an operation.

### Background Art

An operating machine in which a machine body is common while an operation body is configured to be attachable depending on an operation such as cultivating, snow removal or the like is available. JP2006296261 discloses an operating machine including an operation body configured to be selected among a plurality of kind thereof.

In the art disclosed in JP2006296261, an operating machine including a machine body including a drive source, an operation body configured to be attachable and detachable with respect to the machine body and a control unit configured to control the drive source. To each of the plurality of operating bodies, an IC tag in which identification information thereof is written in is attached respectively. To the machine body to which the operation body is attached, an IC tag reader configured to read out the IC tag is attached. When one operation body selected among the plurality of kind thereof is attached to the machine body, the IC tag reader acquires the information of the IC tag and send to the control unit. The control unit identifies the operation body and control the drive source to be in a number of rotations suitable for the operation.

Meanwhile, if the IC tag is employed in order to identify a kind of the operation body, the manufacturing cost thereof is higher. In order to reduce the cost, there is an idea, for example, in which the operation body and the machine body is connected by a coupler, and the control unit recognizes the connection status of wiring for identifying the operation body. However, connection of the coupler for wiring is necessary at a time of attachment of the operation body, and an attachment operation is complicated. Thus, an operating machine which is capable of identifying the operation body in a simple manner and at a low cost is desired.

### Prior Art Documents

### Patent Documents

JP2006296261 and US5794422 both disclose an operating machine comprising power transmission, at least one operation body and a control unit.

### Summary of Invention

The present invention relates to an operating machine including an operation body configured to be selected among a plurality of different operation bodies and allowing to identify the operation body in a simple manner and at a low cost.

### Problems to be Solved by the Invention

### Means for Solving the Problems

The invention provides an operating machine according to claim 1.

According to the invention, the predetermined number of revolutions may be one.

According to the invention, the drive source may be an engine, and the control unit may have a control map for each kind of the operation body of the plurality of operation bodies, and configured to control the engine based on the control map.

### Advantageous Effects of Invention

According to the present invention, one operation body selected among the plurality of operation bodies rotates by the drive source, and is configured to have at least a detection body disposed thereon along a circumference of an approximately identical circle centering around the output shaft. And its configuration is that the power transmission machine includes a sensor configured to detect the at least one detection body at a time of a rotation of the one operation body and to emit a detection signal, and the control unit is configured to identify the one operation body in accordance with the detection signal received from the sensor for a duration as long as the output shaft rotates a predetermined number of revolution.

That is to say, when the operation body rotates, each detection body is displaced along the circumference of the identical circle and is detected by the sensor included in the power transmission machine. The sensor emits a detection signal based on every time the at least one detection body is detected. The control unit which receives the detection signal identifies the operation body in accordance with a number of the detection signals received for a duration as long as the output shaft rotates a predetermined number of revolutions. Thus, the sensor does not need to emit a specific detection signal according to an operation body, however, it is enough to signal that the detection body is detected. Therefore, it is possible to reduce the cost of the sensor.

What is more, plugging and unplugging of a coupler for wiring at a time of replacing an operation body is not necessary. As it is possible to conduct a replacement of the plurality of kind of operating bodies in a simple manner, an operability of the replacement is high. As described above, it is possible to identify the operation body configured to be selected among a plurality of kind thereof in a simple manner and at a low cost.

According to the invention, the control unit may identify the one operation body in accordance with the detection signal received from the sensor for a duration as long as the output shaft rotates one revolution.

That is to say, the control unit identifies the operation body immediately after the output shaft starts to rotate. In this way, it is possible to shorten the time until starting the operation.

According to the present invention, the drive source of the operating machine may be an engine, and the control unit may have a control map for each kind of the operation body of the plurality of operation bodies, and may be configured to control the engine based on the control map. In this way, an operator is able to manipulate the operating machine in a range of a suitable driving speed for an operation, and the operability is enhanced.

### Brief Description of Drawings

Fig. 1 is a perspective view showing a cultivator as an operating machine according to an example of the present invention.
Fig. 2 is a functional diagram of the cultivator shown in Fig. 1.
Fig. 3 is an example of an attachable operation body to a machine body of the cultivator shown in Fig. 1.
Fig. 4 is an example of an attachable operation body to a machine body of the cultivator shown in Fig. 1 and an example of the operating machine.
Fig. 5 is a functional diagram of the machine body to which different operation bodies are attachable.

### Description of Embodiment

Hereinafter, an embodiment of the present invention will be described with reference to the accompanying drawings. In the following description, right and left indicate right and left respectively with an operator of the operating machine as a basis, and front and rear indicate front and rear respectively with a traveling direction of the operating machine as a basis. In addition, Fr indicates front, Rr indicates rear, L indicates left of the operator, R indicates right of the operator, Up indicates up and Dn indicates down in the drawings.

### <Example>

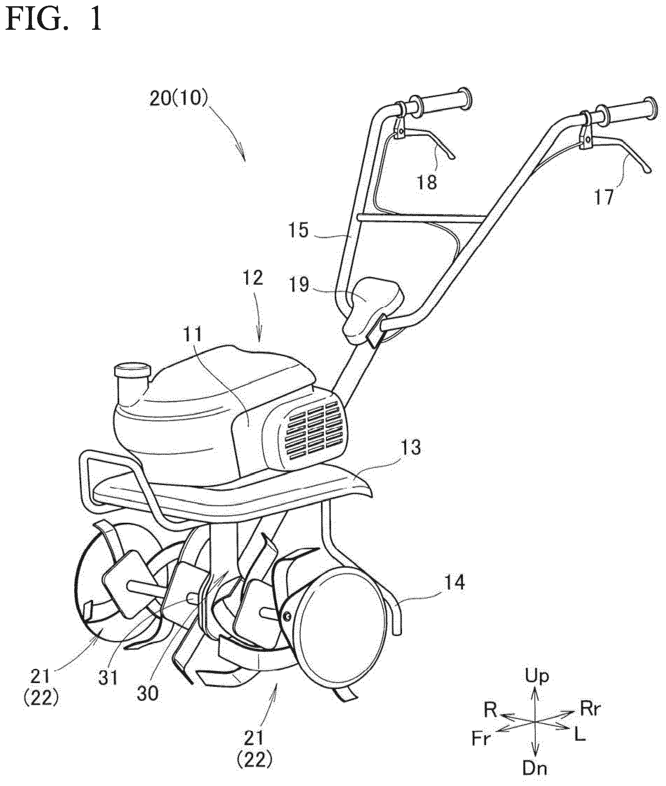

With reference to the Fig. 1, the description is made below. Fig. 1 shows a cultivator 20 as an operating machine 10 according to an example of the present invention. The cultivator 20 includes a machine body 12 including an engine 11 (a drive source 11), a transmission 30 (a power transmission machine 30) provided at lower portion of the machine body 12, a first rotor 21 and a second rotor 21 (an operation body 22) of left and right, provided at an output shaft 31 of the transmission 30 in an attachable and detachable manner, a fender 13 configured to cover the first and the second rotor 21 from an upper direction, a resistance rod 14 provided in a rear portion of the machine body 12 in an attachable and detachable manner, a hand grip 15 extending, ascending backward, from a rear portion of the machine body 12, a clutch lever 17 provided at a left side of the hand grip 15, a speed adjustment lever 18 provided at a right side of the hand grip 15, a control unit 19 provided in a center of the hand grip 15 and being configured to control the engine 11.

An operator starts the engine 11 by an engine switch provided at the control unit 19 and manipulates the clutch lever 17 and the speed adjustment lever 18 together with the hand grip 15 to conduct cultivating operation.

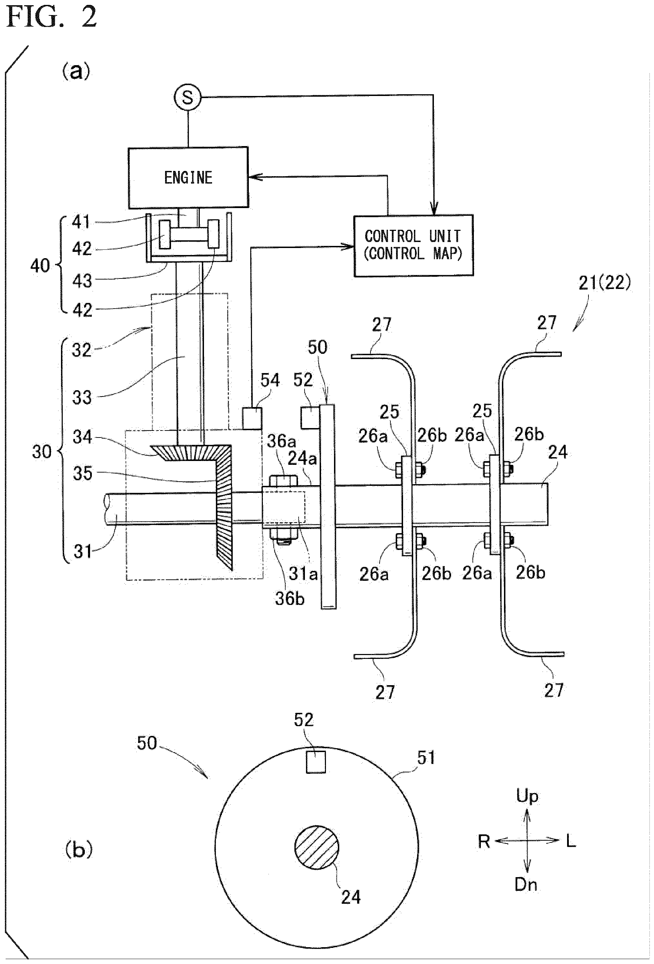

With reference to a part (a) of the Fig. 2, the description is made below. A drive power of the engine 11 is transmitted to the first rotor 21 through a centrifugal clutch 40 and the transmission 30.

The centrifugal clutch 40 includes a drive shaft 41 configured to be a shaft of a side of an output from the engine 11, a pair of left centrifugal piece 42 and right centrifugal piece 42 attached to the drive shaft 41 in a swingable manner in a radial direction and an outer cup 43 configured to accommodate both of the centrifugal pieces 42.

As the number of rotations per time unit of the engine 11 increases, a centrifugal force applied to both of the centrifugal pieces 42 are enlarged, and both of the centrifugal pieces 42 are pressed against an inner circumferential surface of the outer cup 43. In this way, the drive power of the engine 11 is transmitted to the outer cup 43.

The transmission 30 includes a housing 32, an input shaft 33 accommodated in the housing 32 and an upper end thereof is connected to the outer cup 43, a first gear 34 provided at a lower end of the input shaft 33, a second gear 35 configured to mesh with the first gear 34 and an output shaft 31 configured to be concentric with a rotation center of the second gear 35.

The first rotor 21 of a left side includes a first cylindrical portion 24 as a rotation center, both of first base portions 25 fixed to a side circumference of the first cylindrical portion 24 and a plurality of first claws 27 configured to be fastened to both of the first base portions 25 by bolts 26a and a nuts 26b. An end portion 31a of the output shaft 31 of the transmission 30 is inserted into an end portion of the first cylindrical portion 24 of the first rotor 21 and is fastened by a bolt 36a and a nut 36b.

The first rotor 21 of a right side (refer to the Fig. 1) is configured to be symmetrical to the first rotor 21 of the left side. Thus, description of the first rotor 21 of the right side is omitted.

Also, with reference to a part (b) of the Fig. 2, the description is made below. A rotation body 50 seen from a direction of the output shaft 31 of the transmission 30 is shown in the part (b) of the Fig. 2. The rotation body 50 is in a circular disc-like shape seen from the direction of the output shaft 31, and one piece of a magnet 52 (a detection object 52) is attached in a vicinity of an edge portion 51 on an outer circumferential side of the disc.

The rotation body 50 is fixed to an end portion 24a on a side of the transmission 30 of the first cylindrical portion 24. A switch 54 (a sensor 54) is attached to the transmission 30. The switch 54 is a proximity sensor configured to emit detection signal when the magnet 52 is detected. A rotation meter S configured to measure a number of rotation of the engine 11 is attached to the engine 11.

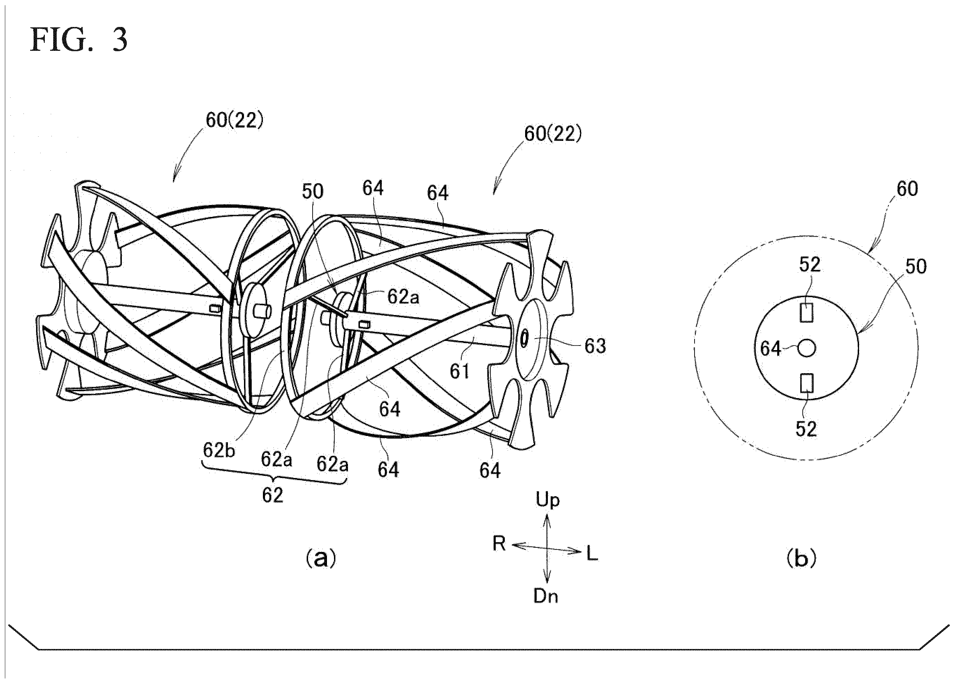

With reference to the Fig. 3, the description is made below. Instead of the first rotor 21 (refer to the Fig. 1), a pair of a first rotor 60 and a second rotor 60 (an operation body 22) configured to be attachable and detachable to the machine body 12 of the cultivator 20 are shown in the Fig. 3.

The second rotor 60 on a left side is in a cylindrical shape and includes a second cylindrical portion 61 as a rotation center, an inner side support portion 62 provided at an end portion of the second cylindrical portion 61 on a side of the transmission 30 (refer to the Fig. 2), an outer side support portion 63 provided at another end portion thereof and a plurality of second cultivating claws 64, each of ends thereof is supported by the inner side support portion 62 and the outer side support portion 63 respectively.

The inner side support portion 62 includes three of linear portions 62a extending in a radial direction from the second cylindrical portion 61 and a circle circumference portion 62a supported by leading ends of the linear portions 62a. The outer side support portion 63 in a shape in which a circular disc is gouged from an outer circumference along a radial direction.

The second rotor 60 of a right side is configured to be symmetrical to the second rotor 60 of the left side. Thus, description of the second rotor 60 of the right side is omitted.

The rotation body 50 is fixed to an end portion on a side of the transmission 30 of the second cylindrical portion 61. A switch 54 (a sensor 54) is attached to the transmission 30. Two pieces of magnet 52 are attached to the rotation body 50 along a circumference of an approximately identical circle centering around the second cylindrical portion 61. Two pieces of the magnets 52 are disposed, being shifted from each other by 180 degrees so that the rotation center is interposed therebetween.

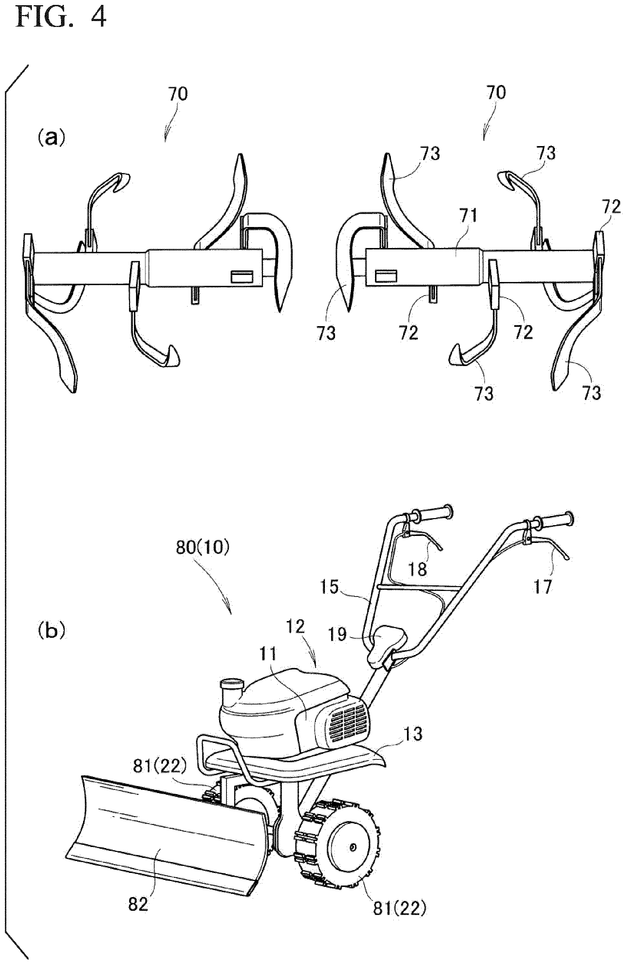

With reference to a part (a) of the Fig. 4, the description is made below. Instead of the first rotor 21 (refer to the Fig. 1), a pair of a third rotor 70 and a third rotor 70 (an operation body 22) configured to be attachable and detachable to the machine body 12 of the cultivator 20 are shown in the part (a) of the Fig. 3.

The third rotor 70 (an operation body) includes a third cylindrical portion 71, a plurality of third base portion 72 extending in a radial direction from the third cylindrical portion 71 and a plurality of third cultivating claws 73 supported by the third base portion 72. The third rotor 70 does not have the rotation body 50 and the magnet 52 (refer to the Fig. 2).

The third rotor 70 of a right side is configured to be symmetrical to the third rotor 70 of the left side. Thus, description of the third rotor 70 of the right side is omitted.

With reference to a part (b) of the Fig. 4, the description is made below. A snow removal machine 80 (an operating machine 10) is shown. The snow removal machine 80 is attached with a left wheel 81 and a right wheel 81 (an operation body 22) instead of the first rotor 21 of the cultivating machine 20 (refer to the Fig. 1). The snow removal machine 80 is also attached with a snow removal blade 82 at a front portion of the machine body 12. The resistance rod 14 (refer to the Fig. 1) is detached from the machine body 12. The both of the wheel 81 do not have the rotation body 50 and the magnet 52 (refer to the Fig. 2).

The control unit 19 has a control map for each of the first rotor 21, the second rotor 60, the third rotor 70 and both of the wheels 81 (refer to the Fig. 2, Fig. 3 and Fig. 4). The control unit 19 controls an output characteristic of the engine 11 based on the control map. More in details, a throttle opening is adjusted, and the number of rotation of the engine (traveling speed) is adjusted.

Hereinafter, functions and effects of the aspect of the present invention are described.

With reference to the Fig. 2, the description is made below. When the first rotor 21 rotates, the magnet 52 is displaced along the circumference of the identical circle. The magnet 52 is detected when it comes close to the switch 54 provided at the transmission 30. Every time the magnet 52 is detected, the switch 54 emit detection signal to the control unit 19. At the same time, the control unit 19 receives signal from the rotation meter S of the engine 11 and calculates the number which the rotation body 50 rotated based on a speed reduction ratio of the transmission 30.

By the number of revolution which the rotation body 50 rotated and the number of detection signal received during a predetermine time, the control unit 19 calculates, for example, the number of detection signal received for a duration as long as the rotation body 50 (the output shaft 31) rotates one revolution. In case where one time of detection signal is detected for a duration as long as the rotation body rotates one revolution, the control unit identifies that the operation body attached to the machine body 12 is the first rotor 21.

The control unit 19 controls an upper limit number of rotations of the engine 11 to be a suitable number of rotations for an operation by the first rotor 21. That is to say, a range of rotation number of the first rotor 21 corresponding to a swing range of the speed adjustment lever 18 (refer to the Fig. 1) is configured to be suitable for cultivating by the first rotor 21.

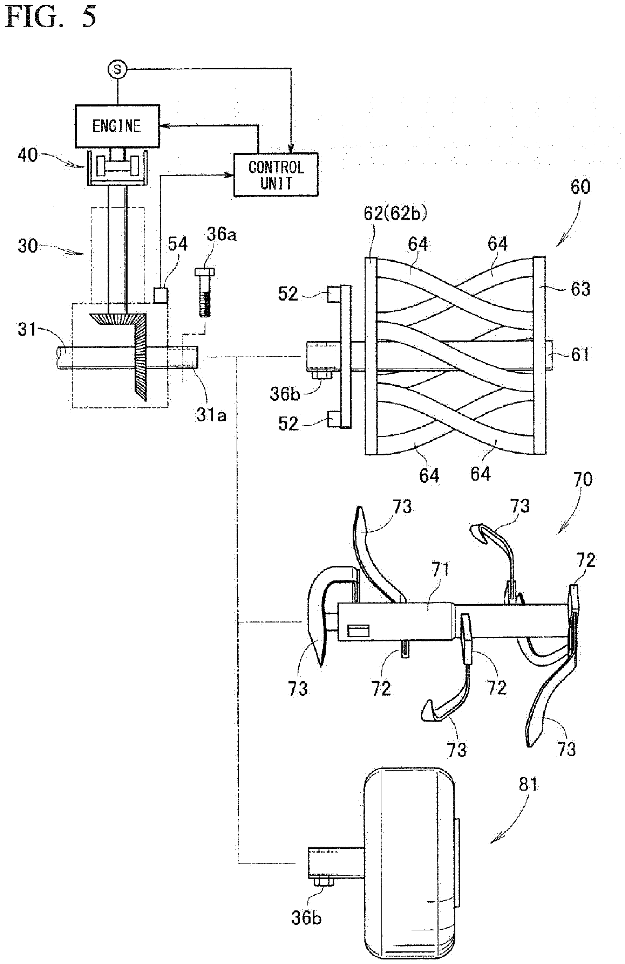

With reference to the Fig. 5, the description is made below. In the second rotor 60, two pieces of magnet 52 are attached to the rotation body 50. Like the first rotor 21, by the number of revolution which the rotation body 50 rotated and the number of detection signal received during a predetermine time, the control unit 19 calculates, for example, the number of detection signal received for a duration as long as the rotation body 50 (the output shaft 31) rotates one revolution. In case where two time of detection signal is detected for a duration as long as the rotation body rotates one revolution, the control unit identifies that the operation body attached to the machine body 12 is the second rotor 60, and controls an upper limit number of rotations of the engine 11 to be a suitable number of rotations for an operation by the second rotor 60.

The rotation body 50 and the magnet 52 are not attached to the third rotor 70 and both of the wheels 81. Thus, even when the third rotor 70 or the wheels 81 are attached, the switch 54 does not emit detection signal. In case the detection signal is not received, the control unit identifies that the operation body attached to the machine body is either the third rotor 70 or the wheels 81, and controls an upper limit number of rotations of the engine 11 to be a suitable number of rotations for cultivating operation by the third rotor 70 or snow removal operation using a snow blade 82.

Depending on an operation body, it may be difficult for attaching the rotation body 50 or the magnet 52. However, even in an operation in which such an operation body is attached, it is possible to control the engine of the operating machine.

As described above, the sensor does not need to emit specific detection signal in accordance with the first rotor 21, the second rotor 60, the third rotor 70 or the wheels 81. That is to say, the sensor is good enough as far as emitting detection signal when the magnet 52 being displaced along the circumference of the identical circle comes close thereto. Therefore, the sensor may be a switch (of an output in a digital format). Consequently, it is possible to reduce a cost of the sensor.

What is more, plugging and unplugging of a coupler for wiring at a time of replacing an operation body 22 is not necessary. As it is possible to conduct a replacement of the plurality of kind of operating bodies 22 in a simple manner, an operability of the replacement is high. As described above, it is possible to identify the operation body 22 configured to be selected among a plurality of kind thereof in a simple manner and at a low cost.

With reference to the Fig. 2 again, the description is made below. In identification of the operation body, for example, the control unit may identify the operation body in accordance with the number of detection signal received from the switch 54 for a duration as long as the output shaft rotates one revolution from the rotation body 50 (the output shaft 31) starts to rotate. The control unit 19 identifies the operation body immediately after the rotation body 50 (the output shaft 31) starts to rotate. In this way, it is possible to shorten the time until starting the operation.

In the present example, the engine 11 is employed as the drive source, however, an electric motor may be employed. In case where an electric motor is employed, for example, the control unit it may identify the operation body referring to the number of detection signal emitted from the sensor for a duration as long as the number of rotations of the electric motor reaches approximately a half of the maximum number of rotations thereof from the electric motor starts to rotate. That is to say, the scope of the present invention is not limited to the example.

### Industrial Applicability

An operating machine of the aspect of the present invention is preferable for an operating machine of a walking type.

One operating body selected among the plurality of kind thereof rotates by the drive source, and is configured to have a detection body disposed thereon along a circumference of an approximately identical circle centering around the output shaft, the power transmission machine includes a sensor configured to detect the detection object at a time of rotation of the one operation body and to emit detection signal, and the control unit is configured to identify the one operation body in accordance with the detection signal received from the sensor for a duration as long as the output shaft rotates a predetermined number of revolution, and is configured to control the drive source to be in a number of rotations suitable for an operation of the one operation body based on an identification result.

### Reference Numerals

- 10: OPERATING MACHINE
- 11: ENGINE (DRIVE SOURCE)
- 12: MACHINE BODY
- 19: CONTROL UNIT
- 20: CULTIVATOR

- 21: CULTIVATING CLAW (22 OPERATION BODY)
- 22: FIRST ROTOR
- 30: TRANSMISSION
- 31: OUTPUT SHAFT
- 50: ROTATION BODY
- 51: EDGE PORTION
- 52: MAGNET
- 54: SWITCH
- S: ROTATION METER
- 60: SECOND ROTOR
- 70: THIRD ROTOR
- 80: SNOW REMOVAL MACHINE
- 81: WHEEL
- 82: SNOW REMOVAL BLADE

## Claims

1. An operating machine comprising:
a power transmission machine (30) with an input shaft (33) linked to a drive source (11);
an operation body (21, 22) to be selected from a plurality of different operation bodies and configured to be attachable and detachable with respect to an output shaft (31) of the power transmission machine (30) depending on an operation; and
a control unit (19) configured to control the drive source (11),
wherein the operation body (21, 22) selected from the plurality of different operation bodies rotates by the drive source (11) and is configured to have at least one detection body (52) disposed thereon along a circumference of an approximately identical circle centered around the output shaft (31) of the power transmission machine (30),
wherein the power transmission machine (30) includes a sensor (54) configured to detect the at least one detection body (52) at a time of rotation of the operation body (21, 22) and to emit a detection signal, wherein the control unit (19) is configured to identify the operation body (21, 22) selected from the plurality of different operation bodies in accordance with the detection signals received from the sensor (54) for a duration as long as the output shaft (31) rotates a predetermined number of revolutions, and wherein
the control unit (19) is configured to control the drive source (11) to be in a number of rotations per time unit suitable for an operation of the operation body (21, 22) selected from the plurality of different operation bodies based on the identification result.

2. An operating machine according to claim 1,
wherein the predetermined number of revolutions is one.

3. An operating machine according to claim 1 or 2,
wherein the drive source is an engine (11) and
wherein the control unit (19) has a control map for each operation body (21, 22) of the plurality of operation bodies and is configured to control the engine (11) based on the control map.

## Patentansprüche

1. Arbeitsmaschine, welche aufweist:
eine Kraftübertragungsmaschine (30) mit einer mit einer Antriebsquelle (11) gekoppelten Eingangswelle (33);
einen Arbeitskörper (21, 22), der aus mehreren unterschiedlichen Arbeitskörpern auszuwählen ist und derart konfiguriert ist, dass er in Bezug auf eine Ausgangswelle (31) der Kraftübertragungsmaschine (30) in Abhängigkeit von einer Arbeit anbringbar und abnehmbar ist; und
eine Steuereinheit (19), die konfiguriert ist, um die Antriebsquelle (11) zu steuern, wobei der aus den mehreren unterschiedlichen Arbeitskörpern ausgewählte Arbeitskörper (21, 22) durch die Antriebsquelle (11) gedreht wird und so konfiguriert ist, dass er zumindest einen Detektionskörper (52) aufweist, der daran entlang einem Umfang eines angenähert identischen Kreises angeordnet ist, der um die Ausgangswelle (31) der Kraftübertragungsmaschine (30) herum zentriert ist,
wobei die Kraftübertragungsmaschine (30) einen Sensor (54) enthält, der konfiguriert ist, um den zumindest einen Detektionskörper (52) während einer Drehung des Arbeitskörpers (21, 22) zu detektieren und ein Detektionssignal abzugeben,
wobei die Steuereinheit (19) konfiguriert ist, um den aus den mehreren unterschiedlichen Arbeitskörpern ausgewählten Arbeitskörper (21, 22) gemäß den von dem Sensor (54) empfangenen Detektionssignalen, für eine Dauer, solange sich die Ausgangswelle (31) eine vorbestimmte Anzahl von Umdrehungen dreht, zu identifizieren und wobei
die Steuereinheit (19) konfiguriert ist, um basierend auf dem Identifikationsergebnis, die Antriebsquelle (11) mit einer Drehzahl zu steuern, die für einen Betrieb des aus den mehreren unterschiedlichen Arbeitskörpern ausgewählten Arbeitskörpers (21, 22) geeignet ist.

2. Arbeitsmaschine nach Anspruch 1,
wobei die vorbestimmte Anzahl von Umdrehungen eins ist.

3. Arbeitsmaschine nach Anspruch 1 oder 2,
wobei die Antriebsquelle ein Verbrennungsmotor (11) ist und
die Steuereinheit (19) ein Steuerkennfeld für jeden Arbeitskörper (21, 22) der mehreren Arbeitskörper aufweist und konfiguriert ist, um den Motor (11) basierend auf dem Steuerkennfeld zu steuern.

## Revendications

1. Machine d'actionnement comprenant :
une machine de transmission de puissance (30) avec un arbre d'entrée (33) relié à une source d'entraînement (11) ;
un corps d'actionnement (21, 22) devant être choisi parmi une pluralité de corps d'actionnement différents et configuré pour pouvoir être attaché et détaché par rapport à un arbre de sortie (31) de la machine de transmission de puissance (30) en fonction d'un actionnement ; et
une unité de commande (19) configurée pour commander la source d'entraînement (11),
dans laquelle le corps d'actionnement (21, 22) choisi parmi la pluralité de corps d'actionnement différents tourne par le biais de la source d'entraînement (11) et est configuré pour avoir au moins un corps de détection (52) disposé dessus, le long d'une circonférence d'un cercle approximativement identique centré autour de l'arbre de sortie (31) de la machine de transmission de puissance (30),
dans laquelle la machine de transmission de puissance (30) comprend un détecteur (54) configuré pour détecter le au moins un corps de détection (52) au moment de la rotation du corps d'actionnement (21, 22) et pour émettre un signal de détection,
dans laquelle l'unité de commande (19) est configurée pour identifier le corps d'actionnement (21, 22) choisi parmi la pluralité de corps d'actionnement différents conformément aux signaux de détection reçus du détecteur (54) pour une durée égale à celle pendant laquelle l'arbre de sortie (31) tourne un nombre prédéterminé de tours,
et dans laquelle l'unité de commande (19) est configurée pour commander la source d'entraînement (11) pour être dans un nombre de rotations par unité de temps adéquat pour un actionnement du corps d'actionnement (21, 22) choisi parmi la pluralité de corps d'actionnement différents sur la base du résultat d'identification.

2. Machine d'actionnement selon la revendication 1, dans laquelle le nombre prédéterminé de tours est un.

3. Machine d'actionnement selon la revendication 1 ou 2, dans laquelle la source d'entraînement est un moteur (11) et dans laquelle l'unité de commande (19) a une carte de commande pour chaque corps d'actionnement (21, 22) de la pluralité de corps d'actionnement et est configurée pour commander le moteur (11) sur la base de la carte de commande.
